# EUROPÄISCHE PATENTSCHRIFT

(11) **EP 3 981 748 B1**
(45) Veröffentlichungstag und Bekanntmachung des Hinweises auf die Patenterteilung: **21.08.2024**
(21) Anmeldenummer: 21201860.0
(22) Anmeldetag: 11.10.2021
(51) Int. Cl.: C03B 11/02, C03B 11/12, C03B 29/02, C03B 29/06, C03B 35/00

(54) **UMFORMVORRICHTUNG ZUR HERSTELLUNG VON GLASPRODUKTEN UND VERFAHREN**
FORMING DEVICE FOR PRODUCING GLASS PRODUCTS AND METHOD
DISPOSITIF DE FORMAGE DESTINÉ À LA FABRICATION DE PRODUITS EN VERRE ET PROCÉDÉ

(30) Priorität: 12.10.2020 DE 102020126664
(43) Veröffentlichungstag der Anmeldung: 13.04.2022
(73) Patentinhaber: Fraunhofer-Gesellschaft zur Förderung der angewandten Forschung e.V., 80686 München (DE)
(72) Erfinder: Kleber, Benjamin, 52074 Aachen (DE); Vogel, Paul-Alexander, 52074 Aachen (DE); Meiners, Constantin, 52074 Aachen (DE)
(74) Vertreter: Heeschen Pültz Patentanwälte PartGmbB

(56) Entgegenhaltungen:
- JP-A- H05 301 724

## Beschreibung

Die Erfindung betrifft eine Umformvorrichtung und ein Verfahren zur Herstellung von Glasprodukten.

Umformvorrichtungen und Verfahren zur Herstellung von Glasprodukten sind grundsätzlich bekannt. Die Herstellung von Glasprodukten kann isotherm oder nicht-isotherm erfolgen. Die nicht-isotherme Herstellung von Glasprodukten zeichnet sich unter anderem dadurch aus, dass die Erwärmung eines Glasrohlings im Wesentlichen unabhängig vom Umformwerkzeug erfolgt. Nicht-isotherme Verfahren können den Vorteil haben, dass das Umformwerkzeug während der Erwärmung eines Glasrohlings für die Umformung eines weiteren Glasrohlings verwendbar ist und somit der Hauptzeitanteil steigerbar ist. Ferner ist in der Regel die Standzeit des Umformwerkzeugs bei nicht-isothermen Verfahren vorteilhaft beeinflusst.

Ein bekanntes Verfahren zur Herstellung von Glasprodukten sieht unter anderem vor, den Glasrohling auf einem unteren Umformelement einer Umformeinheit aufzuwärmen. Ein Nachteil dieses Verfahrens besteht darin, dass die Taktzeiten hoch sind und der Verschleiß des unteren Umformelements durch Kontakt des kalten Glasrohlings mit dem bereits erwärmten unteren Umformelement hoch ist. Darüber hinaus ist oftmals die zu erreichende Formgenauigkeit des herzustellenden Glasproduktes für viele Anwendungen nicht ausreichend.

Eine weitere Möglichkeit zur Herstellung eines Glasproduktes besteht darin, den Glasrohling aufzuwärmen und mit horizontal ausgerichteten Bewegungsschritten zu einer Umformeinheit zu bewegen. Eine solche horizontale Bewegung des Glasrohlings führt jedoch regelmäßig zu einer mangelnden Qualität des Glasproduktes. Aufgrund der teilweise hohen Qualitätsanforderungen an Glasprodukte, beispielsweise für die Lasertechnik, Medizintechnik sowie für das Digital-Imaging und für den Einsatz in Sensorikeinheiten, sind Verfahren mit horizontalen Bewegungen oftmals nicht zur Herstellung der geforderten Qualitäten geeignet.

Glasprodukte für hochqualitative Anwendungen erfordern beispielsweise eine hohe Formgenauigkeit und hohe Oberflächengüten. Darüber hinaus sind die Taktzeiten möglichst gering zu halten, um eine wirtschaftliche Fertigung der Glasprodukte zu gewährleisten.

Die JP H05 301724 A offenbart ein Verfahren zur Formung eines optischen Elements als ein Vormaterial für ein Pressformen zum Erhalten eines fertigen Formobjektes.

Es ist daher eine Aufgabe der Erfindung, eine Umformvorrichtung und ein Verfahren zur Herstellung von Glasprodukten bereitzustellen, die eine oder mehrere der genannten Nachteile vermindern oder beseitigen. Es ist insbesondere eine Aufgabe der Erfindung, eine Lösung bereitzustellen, die eine wirtschaftliche Herstellung von hochqualitativen Glasprodukten ermöglicht.

Gemäß einem ersten Aspekt wird diese Aufgabe gelöst durch eine Umformvorrichtung zur Herstellung von Glasprodukten, umfassend eine Umformeinheit zum Umformen eines verformbaren Glasrohlings in einer Umformposition, eine Transportvorrichtung zur sukzessiven Bewegung von Glasrohlingen in einen Wirkbereich der Umformeinheit, wobei die Transportvorrichtung eine Heizvorrichtung zum Erwärmen von Glasrohlingen in Haltepositionen aufweist, wobei die Umformeinheit und die Transportvorrichtung eingerichtet sind, um einen Glasrohling im Wirkbereich der Umformeinheit mit einer Verbringbewegung von seiner Halteposition in die Umformposition zu verbringen, sodass der Glasrohling in einer Kavität der Umformeinheit positionierbar ist, und wobei die Verbringbewegung im Wesentlichen vertikal ausgerichtet ist.

Der Erfindung lag die Erkenntnis zugrunde, dass horizontale Bewegungen des Glasrohlings zu Kontaminationen führen, wodurch die Qualität des hergestellten Glasproduktes oftmals nicht den hohen Anforderungen gerecht wird. Ferner haben die Erfinder herausgefunden, dass durch die horizontale Bewegung Wärmeverluste am Glasrohling auftreten, die insbesondere bei kleineren Glasrohlingen zu Prozessunsicherheiten und Qualitätsverlusten führen. Darüber hinaus führen horizontale Bewegungen des Glasrohlings zu qualitätsbeeinträchtigenden Vibrationen und zu einem höheren Aufwand in der Prozessführung.

Die Erfinder haben darüber hinaus herausgefunden, dass eine Entkopplung der Haltepositionen zum Aufwärmen der Glasrohlinge und einer Umformposition bei gleichzeitig statischer Anordnung der Umformeinheit zur Herstellung von qualitativ hochwertigen Glasprodukten mit einer geringen Taktzeit eingesetzt werden können. Durch die geschickte Trennung der Halteposition und der Umformposition und der daraus resultierenden Möglichkeit, eine horizontale Bewegung des Glasrohlings zu vermeiden, werden die im Vorherigen genannten Fehlereinflüsse vermindert oder beseitigt.

Das Glasprodukt wird im Wesentlichen durch den umgeformten Glasrohling ausgebildet. Das Glasprodukt ist insbesondere für den Einsatz in der Lasertechnik, der Medizintechnik, in Sensorikeinheiten, in Fahrzeugscheinwerfern sowie für das Digital-Imaging ausgebildet. Das Glasprodukt kann beispielsweise ein Wafer oder eine Kugel sein. Die Umformeinheit ist insbesondere angeordnet und ausgebildet, um einen verformbaren Glasrohling in der Umformposition umzuformen. Hierfür weist die Umformeinheit vorzugsweise die im Folgenden näher erläuterten Umformelemente auf. Der verformbare Glasrohling ist insbesondere auf eine derart hohe Temperatur erwärmbar, dass dieser verformbar ist.

Die Geometrie des Glasrohlings ist vorzugsweise nicht eingeschränkt. Der Glasrohling ist vorzugsweise als Halbzeug ausgebildet. Der Glasrohling kann beispielsweise kugelförmig, zylinderförmig und/oder stangenförmig ausgebildet sein. Darüber hinaus kann der Glasrohling als ein sogenannter Gob ausgebildet sein.

Die Transportvorrichtung ist zur sukzessiven Bewegung von Glasrohlingen in den Wirkbereich der Umformeinheit ausgebildet. Die Glasrohlinge sind an der Transportvorrichtung in Haltepositionen anordenbar. Vorzugsweise sind die Haltepositionen benachbart zueinander an der Transportvorrichtung positioniert. Die Transportvorrichtung ist insbesondere zur horizontalen Bewegung der Glasrohlinge in ihren Haltepositionen ausgebildet. Die Haltepositionen sind vorzugsweise relativ zu der Transportvorrichtung fixiert und relativ zu der Umformeinheit bewegbar. Die Haltepositionen können relativ zu der Heizvorrichtung fixiert oder bewegbar sein, wie es im Folgenden näher erläutert wird. Die Transportvorrichtung ist insbesondere beweglich zu der Umformeinheit angeordnet.

Die Umformeinheit führt bei der Umformung vorzugsweise eine vertikale Bewegung aus. Es ist insbesondere bevorzugt, dass die Bewegung der Glasrohlinge mittels der Transportvorrichtung orthogonal zu der Bewegung der Umformeinheit bei der Umformung ausgerichtet ist.

Die Umformeinheit und die Transportvorrichtung sind eingerichtet, um den Glasrohling im Wirkbereich der Umformeinheit mit der Verbringbewegung von seiner Halteposition in die Umformposition zu verbringen, sodass der Glasrohling in einer Kavität der Umformeinheit positioniert werden kann. Der Wirkbereich der Umformeinheit ist insbesondere als der Bereich zu verstehen, in dem sich Komponenten der Umformeinheit vor, während und/oder nach der Umformung bewegen.

Die Umformvorrichtung weist insbesondere zwei oder mehr, vorzugsweise eine Vielzahl, an Haltepositionen für Glasrohlinge auf. Darüber hinaus ist es bevorzugt, dass die Umformvorrichtung eine einzelne Umformposition aufweist, nämlich im Wirkbereich der Umformeinheit. Ferner vorzugsweise ist die Umformposition durch die Kavität der Umformeinheit definiert und insbesondere vertikal beweglich.

Die Verbringbewegung ist im Wesentlichen vertikal ausgerichtet, sodass im Wesentlichen keine horizontale Bewegung des Glasrohlings bei der Verbringbewegung erforderlich ist. Im Wesentlichen vertikal bedeutet insbesondere, dass die Verbringbewegung eine maximale Abweichung von einer Vertikalen von weniger als 15°, von weniger als 10°, von weniger als 7,5°, von weniger als 5°, von weniger als 2,5° und/oder von weniger als 1° aufweist.

Darüber hinaus resultiert die vertikal ausgerichtete Verbringbewegung zu einer geringen Verbringentfernung zwischen der Halteposition und der Umformposition, sodass eine Kontamination des Glasrohlings zusätzlich vermieden oder verringert wird.

In einer bevorzugten Ausführungsvariante der Umformvorrichtung ist vorgesehen, dass die Umformeinheit ein oberes Umformelement und ein unteres Umformelement, die die Kavität der Umformeinheit ausbilden, umfasst. Die Umformelemente weisen vorzugsweise jeweils eine Bewegungsachse auf. Insbesondere sind die Umformelemente entlang ihrer Bewegungsachse bewegbar. Die Bewegungsachsen sind vorzugsweise im Wesentlichen vertikal ausgerichtet. Die Bewegungsachse des oberen Umformelements und die Bewegungsachse des unteren Umformelements sind vorzugsweise koaxial ausgerichtet. Das untere Umformelement kann eingerichtet sein, um die Verbringbewegung teilweise oder im Wesentlichen vollständig auszuführen, indem dieses auf die Halteposition zubewegt wird, der Glasrohling freigegeben wird und in der Umformposition positioniert wird. In dieser Ausführungsvarianten ist die von dem Glasrohling zurückgelegte Entfernung bei der Verbringbewegung minimiert.

Es darüber hinaus bevorzugt, dass die Umformeinheit eine Hülse aufweist, die angeordnet und ausgebildet ist, um Glasfluss zwischen dem oberen Umformelement und dem unteren Umformelement zu verhindern. Ein solcher Glasfluss tritt unter anderem dann auf, wenn das Material durch die sich aufeinander zu bewegenden Umformelemente umgeformt wird und das Glas in einen Zwischenraum zwischen den Umformelementen gepresst wird. Eine entsprechend angeordnete Hülse kann diesen Glasfluss verhindern, beispielsweise wenn eines der Umformelemente oder beide Umformelemente relativ zu der Hülse bewegbar sind und die Umformung zumindest abschnittsweise innerhalb der Hülse erfolgt.

Eine weitere bevorzugte Ausführungsvariante der Umformvorrichtung zeichnet sich dadurch aus, dass die Umformeinheit eine Vorzentrierungseinheit zur Zentrierung des oberen Umformelements und des unteren Umformelements aufweist. Die Vorzentrierungseinheit ist vorzugsweise im Wesentlichen außerhalb einer Wärmeeinflusszone der Heizvorrichtung angeordnet. Somit ist die Vorzentrierung verschleißarm ausgebildet. Darüber hinaus kann die Vorzentrierungseinheit eine Kühleinheit aufweisen oder mit einer Kühleinheit gekoppelt sein, sodass die Vorzentrierungseinheit kühlbar ist.

Die Vorzentrierungseinheit weist vorzugsweise zwei oder mehr Führungselemente auf, die beispielsweise als Säulen ausgebildet sein können. Es ist insbesondere bevorzugt, dass die Vorzentrierungseinheit vier Führungselemente aufweist. Darüber hinaus können das obere Umformelement und das untere Umformelement an Zentrierplatten angeordnet sein, die jeweils distal angeordnet sind, sodass das obere Führungselement und das untere Führungselement zueinander ausgerichtet sind. Die Zentrierplatten sind vorzugsweise mit den Führungselementen geführt, insbesondere sind die Führungselemente in Eckbereichen der Zentrierplatten angeordnet.

Darüber hinaus ist es bevorzugt, dass die Umformeinheit eine Feinzentrierungseinheit aufweist. Die Feinzentrierungseinheit umfasst vorzugsweise eine untere Zentrierhülse am unteren Umformelement und eine obere Zentrierhülse am oberen Umformelement, wobei die Zentrierhülsen bei einer Umformbewegung der Umformeinheit zunächst mittels Zentrierelementen, beispielsweise einer Zentrierbuchse und einem korrespondierenden Zentrierstift, in einer vordefinierten Weise zueinander ausgerichtet werden. Durch die Ausrichtung der Zentrierbuchsen und die Verbindung des oberen Umformelements mit der oberen Zentrierhülse und des unteren Umformelements mit der unteren Zentrierhülse wird somit eine Zentrierung der Umformelemente zueinander ermöglicht.

In einer weiteren Fortbildung der Umformvorrichtung ist vorgesehen, dass diese eine Positioniervorrichtung mit zwei oder mehr Positioniereinheiten zum Positionieren der Glasrohlinge in ihren Haltepositionen und/oder zum Freigeben eines Glasrohlings zum Verbringen des Glasrohlings von seiner Halteposition in die Umformposition umfasst.

Die Positioniereinheiten sind insbesondere zum Positionieren von Glasrohlingen in ihren Haltepositionen ausgebildet. Die Positioniereinheiten umfassen vorzugsweise jeweils Positionierelemente, die horizontal bewegbar, insbesondere auseinanderbewegbar, ausgebildet sind, sodass ein oberes Umformelement und/oder ein unteres Umformelement der Umformeinheit horizontal zwischen oder horizontal neben den Positionierelementen in vertikaler Richtung bewegbar ist bzw. sind.

In einer weiteren bevorzugten Fortbildung der Umformvorrichtung ist vorgesehen, dass die Positioniereinheiten als Greifer und/oder als Auflageeinheit ausgebildet sind. Der Greifer kann beispielsweise drei oder vier Greifarme als Positionierelemente aufweisen, die zur Ausbildung eines Drei- bzw. Vier-Punktkontakts mit dem Glasrohling ausgebildet sind. Der Greifer ist vorzugsweise mit der Umformeinheit derart koppelbar, dass der Greifer mittels der Umformeinheit öffenbar ist. Hierfür ist vorzugsweise an der Umformeinheit eine Pneumatikeinheit und/oder eine Federeinheit angeordnet. Die Pneumatikeinheit kann mechanisch mit federnd gelagerten Verbindungselementen, die mit dem Greifer verbunden sind, mechanisch gekoppelt werden. Es ist bevorzugt, dass der Greifer temperierbar ausgebildet ist. Der Greifer weist vorzugsweise ein Heizelement, beispielsweise eine in einer Nut angeordnete Heizschlange und/oder interne Fluidkanäle, auf. Das Fluid ist vorzugsweise Luft.

Die Auflageeinheit ist vorzugsweise zweigeteilt ausgebildet, sodass die zwei Teile der Auflageeinheit auseinanderbewegbar sind. Die Auflageeinheit bildet vorzugsweise mit einem auf der Auflageeinheit angeordneten Glasrohling mehrere quasi-Punktkontakte aus. Die quasi-Punktkontakte können beispielsweise eine Auflagefläche von 1-3 mm² aufweisen.

In einer weiteren bevorzugten Ausführungsvariante der Umformvorrichtung ist vorgesehen, dass die Transportvorrichtung zwischen zwei Haltepositionen einen Umformbereich aufweist, wobei die Transportvorrichtung angeordnet und ausgebildet ist, um den Umformbereich nach Verbringen eines Glasrohlings in die Umformposition in einen Wirkbereich der Umformeinheit zu bewegen.

Bei der Anwendung einer derartig ausgebildeten Umformvorrichtung wird der Glasrohling zunächst in seiner Halteposition mittels der Transportvorrichtung in den Wirkbereich der Umformeinheit bewegt und anschließend mit der Verbringbewegung in die Umformposition verbracht. Anschließend bewegt die Transportvorrichtung die Haltepositionen und den Umformbereich weiter, sodass vertikal über oder ggf. auch unter dem Glasrohling der Umformbereich angeordnet ist. Der Umformbereich ist vorzugsweise dadurch gekennzeichnet, dass dieser keine für den Umformprozess nicht erforderlichen Elemente aufweist. Besonders vorteilhaft an dieser Ausführungsvariante ist, dass der Umformbereich ausreichend Raum für die Umformung bereitstellt. Insbesondere befindet sich die Heizvorrichtung nicht im Umformbereich.

Darüber hinaus ist es bevorzugt, dass die Transportvorrichtung Aussparungen aufweist, durch die das untere Umformelement und/oder das obere Umformelement hindurch bewegbar ist bzw. sind. Eine Aussparung kann beispielsweise vertikal unter einer Auflageeinheit angeordnet sein. Da die Transportvorrichtung vorzugsweise durchgängig ausgebildet ist, sind die Aussparungen bevorzugt, damit die Umformelemente aufeinander zubewegt werden können, um den Glasrohling umzuformen. Jede der Aussparungen weist vorzugsweise eine Aussparungsdurchtrittsachse auf.

Es ist darüber hinaus bevorzugt, dass die Heizvorrichtung zwei oder mehr Heizeinheiten mit jeweils einem Heizraum aufweist, wobei jeweils ein Glasrohling in einer Halteposition in dem Heizraum positionierbar ist. Insbesondere ist der Glasrohling in der Halteposition mit einer Positioniervorrichtung, insbesondere einer Positioniereinheit, innerhalb einer der Heizräume positionierbar.

Die Heizeinheiten sind beispielsweise als Heiztöpfe ausgebildet. Die Heizeinheiten sind vorzugsweise vertikal unter und/oder über einer im Vorherigen genannten Aussparung der Transportvorrichtung angeordnet. Die Heizeinheiten können beispielsweise fest an der Transportvorrichtung angeordnet sein. Die Heizeinheiten weisen vorzugsweise an den Heizraum angrenzende Heizelemente auf. Darüber hinaus ist es bevorzugt, dass die Heizeinheiten jeweils ein isolierendes Gehäuse aufweisen. Vorzugsweise weisen die Heizeinheiten jeweils einen Strahlungsfilter auf, der zwischen den Heizelementen und dem Heizraum angeordnet ist, um die Wärmeabgabe von den Heizelementen auf den Glasrohling zu homogenisieren. Der Strahlungsfilter kann beispielsweise eine den Heizraum ausbildende Wandung aus Metall und/oder Keramik sein.

Die Heizräume sind insbesondere jeweils angeordnet und ausgebildet, dass sich ein unteres und ein oberes Umformelement innerhalb einer der Heizräume bewegen können. Bei einer derartigen Ausbildung der Heizräume kann die Umformung des Glasrohlings innerhalb der Heizeinheit erfolgen. Die Heizeinheiten werden vorzugsweise von der Transportvorrichtung relativ zu der Umformeinheit bewegt. Infolgedessen können die Heizeinheiten zu der vorzugsweise ortsfesten angeordneten Umformeinheit bewegt werden.

Es ist darüber hinaus bevorzugt, dass ein im Vorherigen beschriebener Umformbereich zwischen zwei Heizeinheiten angeordnet ist. Die Heizräume weisen vorzugsweise jeweils eine Heizraumdurchtrittsachse auf, die parallel und beabstandet zueinander ausgerichtet sind, insbesondere sodass stirnseitige obere Enden in einer Ebene und stirnseitige untere Enden der Heizräume in einer weiteren Ebene angeordnet sind. Die Heizraumdurchtrittsachsen sind vorzugsweise parallel zu den Aussparungsdurchtrittsachsen ausgerichtet. Ferner vorzugsweise ist eine Heizraumdurchtrittsachse eines Heizraumes und eine Aussparungsdurchtrittsachse einer korrespondierenden Aussparung koaxial angeordnet. Die Heizräume sind vorzugsweise gleich ausgebildet.

Bei der Anwendung einer derartig ausgebildeten Umformvorrichtung ist es vorgesehen, dass ein Glasrohling in einer Halteposition innerhalb eines Heizraumes positioniert, die Heizeinheit in den Wirkbereich der Umformeinheit bewegt, der Glasrohling von der Halteposition in die Umformposition verbracht und anschließend mittels der Umformeinheit umgeformt wird. Ein besonderer Vorteil dieser Ausführungsvariante besteht darin, dass ein kurzer Weg zwischen Halteposition und Umformposition ermöglicht wird. Darüber hinaus besteht lediglich ein geringer oder kein zeitlicher Abstand zwischen Aufheizen und Umformen.

Es ist bevorzugt, dass das obere Umformelement im Betrieb an einem oberen stirnseitigen Ende eines jeden Heizraumes hinein- und herausführbar ist. Ferner ist es bevorzugt, dass das untere Umformelement im Betrieb an einem unteren stirnseitigen Ende des Heizraumes hinein- und herausführbar ist. Alternativ kann die Umformvorrichtung gegebenenfalls auch gedreht werden, sodass beispielsweise die im Vorherigen genannten Bewegungen anstatt horizontal vertikal und anstatt vertikal horizontal sind.

Eine weitere bevorzugte Ausführungsvariante zeichnet sich dadurch aus, dass die Heizräume jeweils ein offenes oberes und/oder ein offenes unteres Ende, insbesondere stirnseitiges Ende, aufweist bzw. aufweisen und die oberen und/oder unteren Enden mit mindestens einem Abdeckelement zumindest teilweise verschließbar sind.

In einer bevorzugten Ausführungsvariante weist jede Heizeinheit ein separates Abdeckelement auf, das beispielsweise als Hitzeschild ausgebildet ist. Die separaten Abdeckelemente sind vorzugsweise bewegbar an den Heizeinheiten angeordnet, sodass diese zur Freigabe der Heizräume für die Umformeinheit ausgebildet sind.

Alternativ kann das Abdeckelement angeordnet und ausgebildet sein, zwei oder mehr, insbesondere eine Vielzahl an, Heizräumen zumindest teilweise zu verschließen. Das Abdeckelement kann beispielsweise ringscheibenförmig und/oder plattenförmig ausgebildet sein, wobei vorzugsweise eine Aussparung für die Umformeinheit vorgesehen ist. Das Abdeckelement ist vorzugsweise relativ zu der Umformeinheit fixiert. Das Abdeckelement und die Transportvorrichtung sind vorzugsweise beweglich zueinander angeordnet, sodass beispielsweise die Transportvorrichtung mittels eines Lagers an dem Abdeckelement gelagert sein kann.

Eine weitere bevorzugte Ausführungsvariante der Umformvorrichtung zeichnet sich dadurch aus, dass die Heizvorrichtung ein Heizgehäuse aufweist, das eine Aussparung zur Anordnung der Umformeinheit aufweist, wobei vorzugsweise die Transportvorrichtung teilweise innerhalb des Heizgehäuses angeordnet ist. Das Heizgehäuse ist vorzugsweise angeordnet und ausgebildet, um die Glasrohlinge zu erwärmen, beispielsweise mit innerhalb des Heizgehäuses angeordneten Heizelementen. Die Heizvorrichtung mit einem Heizgehäuse kann auch als Alternative zu den im Vorherigen einzelnen Heizeinheiten vorgesehen werden.

Die Glasrohlinge können mittels der Transportvorrichtung durch das Heizgehäuse hindurchbewegt und innerhalb des Heizgehäuses aufgewärmt werden. Mittels der Transportvorrichtung werden die Glasrohlinge in den Wirkbereich der Umformeinheit bewegt. Bei der Bewegung der Glasrohlinge durch das Heizgehäuse hin zur Umformeinheit können die Glasrohlinge in vorteilhafterweise aufgewärmt werden. Insbesondere kann innerhalb des Heizgehäuses entlang einer Bewegungsrichtung der Glasrohlinge ein Temperaturgradient einstellbar sein, sodass die Temperatur sukzessive steigerbar ist. Somit können beispielsweise Temperaturschocks vermieden werden.

Das Heizgehäuse kann beispielsweise teilkreisförmig ausgebildet sein, wobei die Umformeinheit im Bereich der Aussparung angeordnet ist. Es ist bevorzugt, dass das Heizgehäuse schlauchförmig ausgebildet ist. Darüber hinaus ist es bevorzugt, dass der Umformbereich in der Aussparung anordenbar ist.

In einer weiteren bevorzugten Ausführungsvariante ist das Heizgehäuse teilschlauchförmig mit einem Gehäuseeingang und einem Gehäuseausgang ausgebildet, wobei die Umformeinheit und vorzugsweise die Vorzentriereinheit zwischen dem Gehäuseeingang und dem Gehäuseausgang angeordnet ist. Zwischen dem Gehäuseeingang und dem Gehäuseausgang sind vorzugsweise seitliche Begrenzungen angeordnet, so dass eine Öffnung für die Umformeinheit zwischen dem Gehäuseeingang und dem Gehäuseausgang im Wesentlichen in einem oberen und einem unteren Gehäuseabschnitt ausgebildet ist. Die seitlichen Begrenzungen können Teil des Heizgehäuses sein. Insbesondere ist es bevorzugt, dass die seitlichen Begrenzungen Heizelemente aufweisen, sodass der Glasrohling während der Umformung mit der Umformeinheit mit Wärmeenergie versorgbar ist.

Eine weitere bevorzugte Fortbildung der Umformvorrichtung zeichnet sich dadurch aus, dass die Haltepositionen kreisbahnförmig angeordnet sind und wobei vorzugsweise die Transportvorrichtung und/oder die Heizvorrichtung kreisbahnförmig ausgebildet sind. Alternativ können die Haltepositionen auch auf einer Geraden angeordnet sein. Beispielsweise kann die Transportvorrichtung als eine linear hin- und herbewegbare gerade Einheit ausgebildet sein.

Eine weitere bevorzugte Fortbildung der Umformvorrichtung umfasst eine Steuerungsvorrichtung, die eingerichtet ist, um die Transportvorrichtung derart anzusteuern, dass ein Glasrohling in einen Wirkbereich der Umformeinheit bewegt wird, sodass der Glasrohling in seiner Halteposition im Wesentlichen vertikal über der Umformposition positioniert ist.

Darüber hinaus kann die Steuerungsvorrichtung eingerichtet sein, um die Positioniervorrichtung derart anzusteuern, dass der Glasrohling mit der im Wesentlichen vertikal ausgerichteten Verbringbewegung von der Halteposition in die Umformposition verbracht wird, sodass der Glasrohling in einer Kavität der Umformeinheit positioniert ist.

Des Weiteren kann die Steuerungsvorrichtung eingerichtet sein, die Transportvorrichtung derart anzusteuern, dass diese den Umformbereich in den Wirkbereich der Umformeinheit bewegt, insbesondere nachdem der Glasrohling in die Umformposition verbracht wurde.

In einer weiteren bevorzugten Ausführungsvariante der Steuerungsvorrichtung ist diese eingerichtet, um die Umformeinheit derart anzusteuern, dass der Glasrohling umgeformt wird, insbesondere durch ein Ansteuern des oberen Umformelements und des unteren Umformelements derart, dass sich diese aufeinander zubewegen.

Ferner kann die Steuerungsvorrichtung eingerichtet sein, einen Weg und eine Kraft der Umformeinheit zu regeln, wobei vorzugsweise Servoantriebe der Umformeinheit angesteuert werden. Es ist insbesondere bevorzugt, dass eine Umformbewegung der Umformeinheit bis zum Erreichen einer vordefinierten Umformkraft weggesteuert ist.

Darüber hinaus kann die Steuerungsvorrichtung zur Ansteuerung des Heizgehäuses eingerichtet sein, sodass entlang eines Weges der Glasrohlinge durch das Heizgehäuse ein Temperaturgradient ausgebildet wird, wobei vorzugsweise die Temperatur entlang des Weges ansteigt.

In einer weiteren bevorzugten Ausführungsvariante umfasst die Umformvorrichtung einen Lasersensor zur Erfassung der Beabstandung zwischen dem unteren Umformelement und dem oberen Umformelement, insbesondere der oberen Zentrierplatte von der unteren Zentrierplatte. Es ist ferner bevorzugt, dass die Steuerungsvorrichtung ein von dem Lasersensor bereitgestelltes Abstandssignal zur Steuerung und/oder Regelung der Umformeinheit verwendet. Das Abstandssignal repräsentiert insbesondere die Beabstandung zwischen dem unteren Umformelement und dem oberen Umformelement. Des Weiteren kann die Steuerungsvorrichtung eingerichtet sein, eine Temperierung des Greifers zu steuern und/oder zu regeln.

Gemäß einem weiteren Aspekt wird die eingangs genannte Aufgabe gelöst durch ein Verfahren zur Herstellung von Glasprodukten, insbesondere mit einer Umformvorrichtung nach einer der im Vorherigen beschriebenen Ausführungsvarianten, umfassend die Schritte: Erwärmen von Glasrohlingen in Haltepositionen, insbesondere mit einer Heizvorrichtung, Bewegen einer der Glasrohlinge in einen Wirkbereich einer Umformeinheit, insbesondere mit einer Transportvorrichtung, Verbringen des Glasrohlings von seiner Halteposition in eine Umformposition mit einer im Wesentlichen vertikal ausgerichteten Verbringbewegung, Umformen des Glasrohlings in der Umformposition, insbesondere mit der Umformeinheit.

Eine bevorzugte Ausführungsvariante des Verfahrens umfasst den Schritt: Bewegen eines zwischen zwei Haltepositionen angeordneten Umformbereichs in den Wirkbereich der Umformeinheit, nachdem der Glasrohling in die Umformposition verbracht wurde.

Darüber hinaus ist es bevorzugt, dass das Verbringen des Glasrohlings von seiner Halteposition in die Umformposition ein Bewegen eines unteren Umformelements der Umformeinheit vertikal unter den Glasrohling, insbesondere mit einem Abstand von weniger als 5 cm, weniger als 4 cm, weniger als 3 cm, weniger als 2 cm, weniger als 1 cm, weniger als 0,5 cm, und/oder ein Freigeben des Glasrohlings, insbesondere ein Öffnen einer Positioniereinheit, umfasst.

Das Verfahren und seine möglichen Fortbildungen weisen Merkmale bzw. Verfahrensschritte auf, die sie insbesondere dafür geeignet machen, für eine Umformvorrichtung und ihre Fortbildungen verwendet zu werden.

Für weitere Vorteile, Ausführungsvarianten und Ausführungsdetails des Verfahrens und seiner möglichen Fortbildungen wird auch auf die zuvor erfolgte Beschreibung zu den entsprechenden Merkmalen und Fortbildungen der Umformvorrichtung verwiesen.

Bevorzugte Ausführungsbeispiele werden exemplarisch anhand der beiliegenden Figuren erläutert. Es zeigen:
- Figur 1:: eine schematische, zweidimensionale Ansicht einer beispielhaften Ausführungsform einer Umformvorrichtung;
- Figur 2:: eine schematische Draufsicht der Umformeinheit aus Figur 1;
- Figur 3:: eine schematische, dreidimensionale Ansicht einer beispielhaften Ausführungsform einer Heizeinheit;
- Figur 4:: eine schematische, zweidimensionale Ansicht der Heizeinheit aus Figur 3;
- Figur 5:: eine weitere schematische, zweidimensionale Ansicht einer beispielhaften Ausführungsform einer Umformvorrichtung;
- Figur 6:: eine schematische Draufsicht der in Figur 5 gezeigten Umformvorrichtu ng;
- Figur 7:: eine weitere schematische, zweidimensionale Ansicht einer beispielhaften Ausführungsform einer Umformvorrichtung;
- Figur 8:: eine schematische Draufsicht der in Figur 7 gezeigten Umformvorrichtung;
- Figur 9:: eine weitere schematische, zweidimensionale Ansicht einer beispielhaften Ausführungsform einer Umformvorrichtung;
- Figur 10:: eine schematische Draufsicht der in Figur 9 gezeigten Umformvorrichtung; und
- Figur 11:: ein schematisches Verfahren.

In den Figuren sind gleiche oder im Wesentlichen funktionsgleiche bzw. -ähnliche Elemente mit den gleichen Bezugszeichen bezeichnet. Die in den Figuren gezeigten Komponenten der Umformvorrichtung sind schematisch dargestellt. Eine teilweise oder vollständige Kombination der in den Figuren gezeigten Ausführungsvarianten ist in vorteilhafterweise bevorzugt, wobei die Vielzahl möglicher Kombinationen nicht näher erläutert wird.

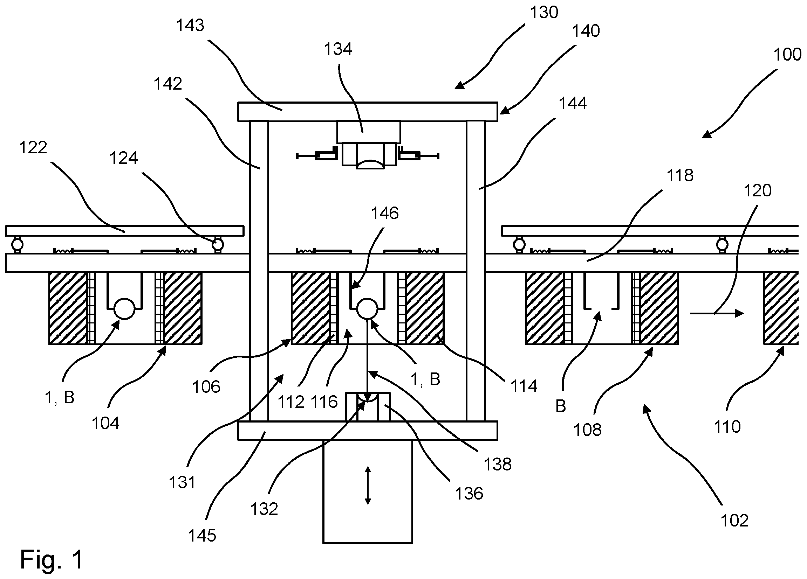

Figur 1 zeigt eine erste beispielhafte Ausführungsvariante einer Umformvorrichtung 100 für eine nicht-isotherme Herstellung von Glasprodukten. Die Umformvorrichtung 100 umfasst eine Umformeinheit 130 zum Umformen eines verformbaren Glasrohlings 1 in einer Umformposition. Die Umformeinheit 130 weist einen Wirkbereich 131 auf, in dem sich Komponenten der Umformeinheit 130 bewegen können.

Die Umformeinheit 130 umfasst ferner ein oberes Umformelement 134 und ein unteres Umformelement 136. Das untere Umformelement 136 ist angeordnet und ausgebildet, um in Richtung des oberen Umformelements 134 bewegt zu werden. Analog hierzu ist das obere Umformelement 134 angeordnet und ausgebildet, um in Richtung des unteren Umformelements 136 bewegt zu werden. Die Umformeinheit 130 weist darüber hinaus eine Kavität 132 auf, die durch konkave Geometrien an den Umformelementen 134, 136 ausgebildet wird.

Die Umformvorrichtung 100 weist darüber hinaus eine Transportvorrichtung 118 auf, die zur sukzessiven Bewegung von Glasrohlingen 1 in den Wirkbereich 131 der Umformeinheit 130 ausgebildet ist. Die Transportvorrichtung 118 weist hierfür vorzugsweise einen Antrieb auf, der die Transportvorrichtung antreibt.

Die Transportvorrichtung weist darüber hinaus eine Heizvorrichtung 102 zum Erwärmen von Glasrohlingen in Haltepositionen B auf. Es sind unterschiedliche Ausführungsformen der Heizvorrichtung 102 denkbar. In Figur 1 ist die Heizvorrichtung 102 durch separate Heizeinheiten 104, 106, 108, 110 ausgebildet. Die Heizeinheiten 104 - 110 weisen jeweils mindestens ein Heizelement 112 zur Abgabe von Wärmeenergie auf. Darüber hinaus sind die Heizelemente 112 von einer Ummantelung 114 umgeben, die auch isolierend wirken kann. Die Heizelemente 112 sind im Wesentlichen rohrförmig angeordnet, sodass in deren Innenraum ein Heizraum 116 ausgebildet wird.

Die Heizeinheiten 104 - 110 sind an der Transportvorrichtung 118 fixiert. Die Heizeinheiten 104 - 110 sind benachbart und beabstandet an der Transportvorrichtung 118 angeordnet. Die Transportvorrichtung 118 bewegt die Heizeinheiten 104 - 110 in Bewegungsrichtung 120. Die Bewegung erfolgt sukzessiv, sodass beispielsweise im vorliegenden Zustand die Heizeinheit 106 und mit diesem der Glasrohling 1 in seiner Halteposition B im Wirkbereich 131 der Umformeinheit 130 positioniert ist. Die sukzessive Bewegung wird auch als Index-Bewegung bezeichnet.

Jede Heizeinheit 104 - 110 umfasst einen Teil einer Positioniervorrichtung 146. Mit diesem Teil der Positioniervorrichtung 146 wird ein Glasrohling 1 in seiner Halteposition B positioniert. In der Halteposition B werden die Glasrohlinge zumindest zeitweise durch die Heizelemente 112 erwärmt.

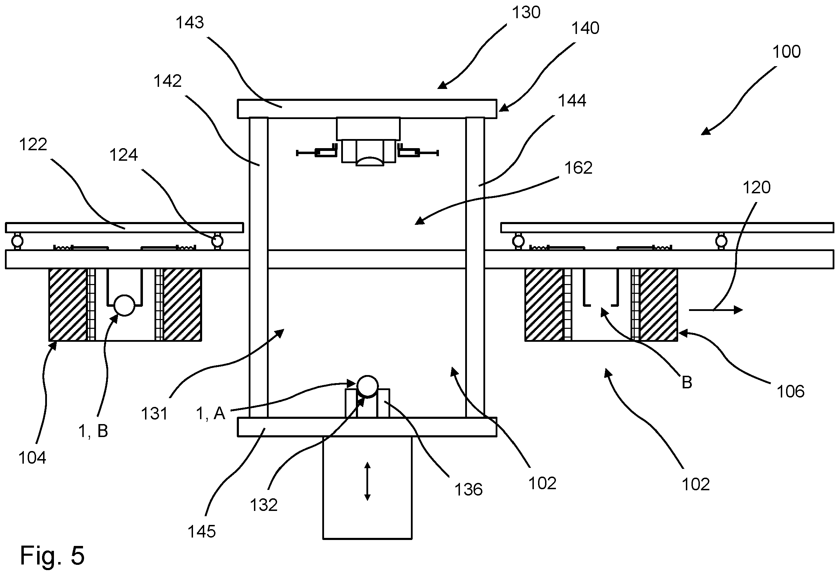

Die Umformeinheit 130 und die Transportvorrichtung 118 sind mittels des Teils der Positioniervorrichtung 146 eingerichtet, um den Glasrohling 1 im Wirkbereich 131 der Umformeinheit 130 mit einer Verbringbewegung 138 von seiner Halteposition B in die Umformposition A, wie sie in Figur 5 gezeigt ist, zu verbringen, sodass der Glasrohling 1 in der Kavität 132 der Umformeinheit 130 positioniert ist. Die Verbringbewegung 138 ist im Wesentlichen vertikal ausgerichtet.

Durch eine derartige Verbringbewegung 138, die im Wesentlichen vertikal ausgerichtet ist, erfährt der Glasrohling 1 eine geringe Kontamination, geringe Vibration und lediglich geringfügige Haltestellen. Ferner wird die Temperatur des Glasrohlings nicht oder lediglich geringfügig beeinflusst. Dadurch wird die Qualität des aus dem Glasrohling 1 hergestellten Glasproduktes verbessert.

Die Umformeinheit 130 ist an einer Vorzentrierungseinheit 140 angeordnet. Die Vorzentrierungseinheit 140 zentriert die Umformelemente 134, 136 zueinander. Die Vorzentrierungseinheit 140 weist dafür ein erstes Zentrierelement 142 und ein zweites Zentrierelement 144 auf, wobei vorzugsweise zusätzlich nicht gezeigte weitere zwei Zentrierelemente vorgesehen sind. Die Zentrierelemente 142, 144 verbinden zwei Zentrierplatten 143, 145, an denen die Umformelemente 134, 136 angeordnet sind. Die Zentrierplatten 143, 145 sind in vertikaler Richtung relativ zu den Zentrierelementen 142, 144 bewegbar.

Die Transportvorrichtung 118 weist darüber hinaus ein Abdeckelement 122 auf. Das Abdeckelement 122 ist in vertikaler Richtung über den Heizeinheiten 104-110 angeordnet, sodass der Wärmeverlust in den Heizräumen der Heizeinheiten verringert wird. Das Abdeckelement 122 ist vorzugsweise relativ zu der Umformeinheit 130 unbeweglich. Damit die Transportvorrichtung 118 dennoch relativ zu der Umformvorrichtung 130 bewegbar ist, ist das Abdeckelement 122 beweglich an der Transportvorrichtung 118 mittels eines Lagers 124 gelagert.

Nachdem der Glasrohling 1 mittels der Umformelemente 134, 136 umgeformt wurde, bewegen sich die Umformelemente 134, 136 wieder auseinander, sodass der umgeformte Glasrohling bzw. das Glasprodukt entnehmbar ist. Beispielsweise kann das Glasprodukt zunächst auf dem unteren Umformelement 136 verbleiben und von einem Greifer, beispielsweise einem Vakuumgreifer oder einem mechanischen Greifer, entnommen werden. Alternativ kann das obere Umformelement 134 zur Erzeugung eines Unterdrucks und/oder eines Vakuums ausgebildet sein, sodass das Glasprodukt von dem oberen Umformelement 134 zunächst gehalten wird. Das obere Umformelement weist hierfür vorzugsweise Vakuumbohrungen und/oder -schlitze zu Erzeugung des Unterdrucks und/oder des Vakuums auf. Aus dieser Position kann das Glasprodukt entnommen werden.

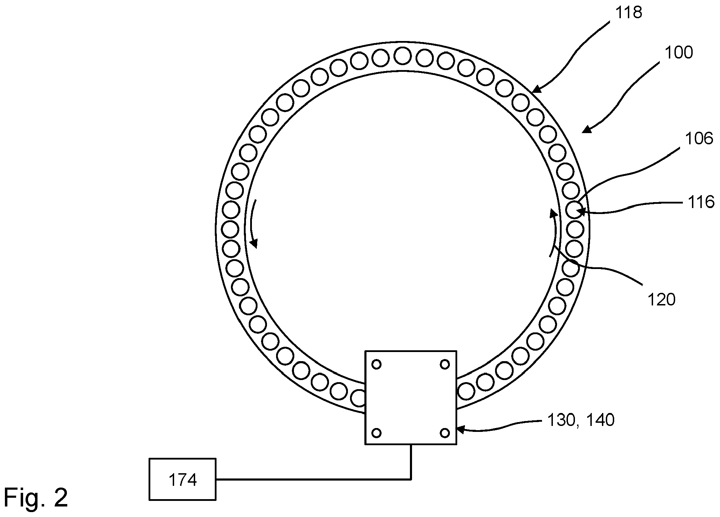

Figur 2 zeigt eine Draufsicht der zuvor beschriebenen Umformvorrichtung 100. Es ist ersichtlich, dass an einer Position der Umformvorrichtung 100 die Umformeinheit 130 mit der Vorzentrierungseinheit 140 angeordnet ist. Die Transportvorrichtung 118 weist die Vielzahl an Heizeinheiten 104-110 auf, für die exemplarisch die Heizeinheit 106 mit einem Bezugszeichen versehen ist. Darüber hinaus sind aus dieser Perspektive die Heizräume 116 gezeigt, da in dieser Darstellung das Abdeckelement 122 nicht dargestellt ist. Die Transportvorrichtung 118 kann sich um einen Mittelpunkt in Bewegungsrichtung 120 bewegen. Dadurch werden sukzessive die Heizräume 116 der Umformeinheit 130 zugeführt. Infolgedessen kann sukzessive eine Umformung der aufgewärmten Glasrohlinge 1 erfolgen.

Die Umformvorrichtung 100 umfasst ferner eine Steuerungsvorrichtung 174, die eingerichtet ist, um die Transportvorrichtung 118 derart anzusteuern, dass einer der Glasrohlinge 1 in seiner Halteposition B in den Wirkbereich 131 der Umformeinheit 130 bewegt wird, sodass der Glasrohling 1 in seiner Halteposition B im Wesentlichen vertikal über der Umformposition A positioniert wird. Darüber hinaus kann die Steuerungsvorrichtung 174 eingerichtet sein, um die Positioniervorrichtung 146 derart anzusteuern, dass der Glasrohling 1 mit der im Wesentlichen vertikal ausgerichteten Verbringbewegung 138 von der Halteposition B in die Umformposition A verbracht wird, sodass der Glasrohling 1 in einer Kavität 132 der Umformeinheit 130 positioniert ist. Ferner ist die Steuerungsvorrichtung 174 eingerichtet, die Umformeinheit 130 derart anzusteuern, dass der Glasrohling 1 umgeformt wird, insbesondere durch ein Ansteuern des oberen Umformelements 134 und des unteren Umformelements 136 derart, dass sich diese aufeinander zubewegen.

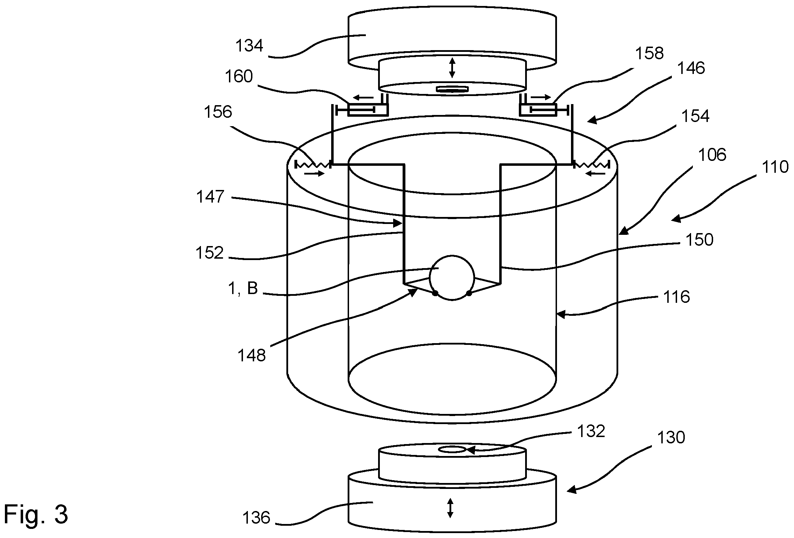

Figur 3 zeigt eine exemplarische Darstellung der Heizeinheit 106. Innerhalb des Heizraumes 116 ist der Glasrohling 1 in seiner Halteposition B gezeigt. In der Halteposition B wird der Glasrohling mittels der Positioniereinheit 147 der Positioniervorrichtung 146 gehalten. Die Positioniereinheit 147 ist als ein Greifer 148 ausgebildet. Der Greifer 148 weist ein erstes Hebelelement 150 und ein zweites Hebelelement 152 auf, die jeweils mit einem Federelement 154, 156 gekoppelt sind. Die Hebelelemente 150, 152 sind darüber hinaus mit Pneumatikzylindern 158, 160 koppelbar, die beispielsweise fest an dem oberen Umformelement 134 angeordnet sein können.

Durch eine Bewegung der beweglichen Komponenten der Pneumatikzylinder kann der Greifer 148 geöffnet und geschlossen werden. Das untere Umformelement 136 kann im vorliegenden Fall beispielsweise in den Heizraum 116 hineingefahren werden, sodass der Glasrohling 1 in unmittelbarer Nähe zur Kavität 132 des unteren Umformelements 136 angeordnet ist, insbesondere dass die Beabstandung zwischen Kavität 132 und Glasrohling 1 gering ist. In diesem Zustand kann der Greifer 148 geöffnet werden und der Glasrohling wird von der Halteposition B mit einer Verbringbewegung 138 in eine Umformposition A, nämlich innerhalb der Kavität 132, verbracht. Die Verbringbewegung 138 kann auch teilweise oder im Wesentlichen vollständig von dem unteren Umformelement 136 ausgeführt werden.

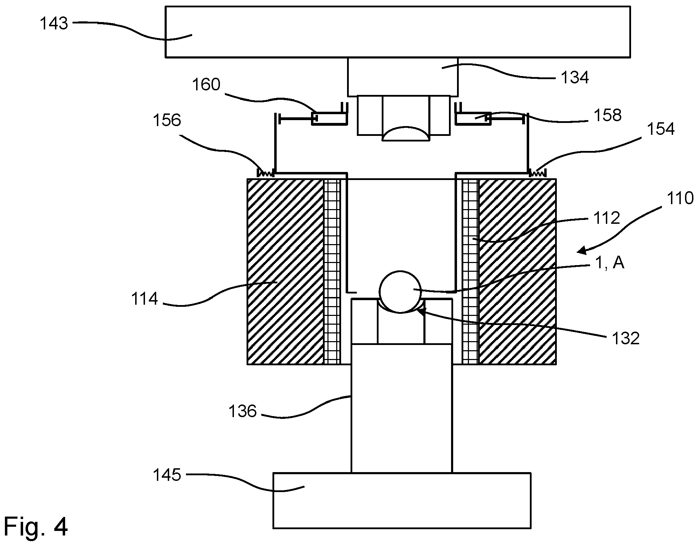

Diese Umformposition ist in Figur 4 gezeigt, in der der Greifer geöffnet und der Glasrohling 1 in der Umformposition A angeordnet ist. In diesem Zustand können das obere Umformelement 134 und das untere Umformelement 136 zusammengefahren werden, sodass der Glasrohling 1 umgeformt wird.

Figur 5 zeigt eine weitere Ausführungsvariante der Umformvorrichtung 100. Es ist gezeigt, dass zwischen zwei Haltepositionen Bein Umformbereich 162 angeordnet ist. Nach Verbringen des Glasrohlings 1 in die Umformposition A der Umformeinheit 130 aus der Halteposition B der Heizeinheit 106, bewegt die Transportvorrichtung 118 den Umformbereich 162 in den Wirkbereich 131 der Umformeinheit 130. Diese Ausführungsvariante hat den Vorteil, dass ausreichend Raum für die Umformeinheit 130 und die Vorzentrierungseinheit 140 zur Verfügung steht. Insbesondere ist es nicht erforderlich, die Umformelemente 134, 136 durch einen Heizraum 116 hindurchzuführen.

Die Steuerungsvorrichtung 174 ist vorzugsweise eingerichtet, um die Transportvorrichtung 118 derart anzusteuern, dass diese den Umformbereich 162 in den Wirkbereich 131 der Umformeinheit 130 bewegt.

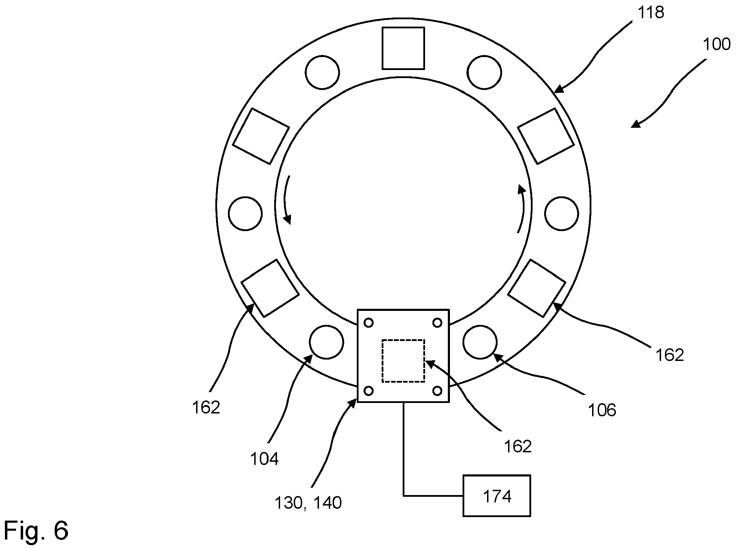

Figur 6 zeigt die in Figur 5 gezeigte Umformvorrichtung 100 in einer Draufsicht. Die Heizeinheiten 104 - 110 und die Umformbereiche 162 wechseln sich alternierend ab. Dadurch ist es möglich, dass eine Heizeinheit 104 - 110 zur Umformeinheit 130 mittels der Transportvorrichtung 118 bewegt wird, der Glasrohling 1 dort von der Halteposition B in eine Umformposition A an der Umformeinheit 130 mittels der vertikal ausgerichteten Verbringbewegung 138 verbracht wird, sich die Transportvorrichtung 118 weiterdreht, sodass sich einer der Umformbereiche 162 im Wirkbereich 131 der Umformeinheit 130 befindet und dass anschließend eine Umformung des Glasrohlings 1 mit der Umformeinheit 130 innerhalb des Umformbereichs 162 erfolgt.

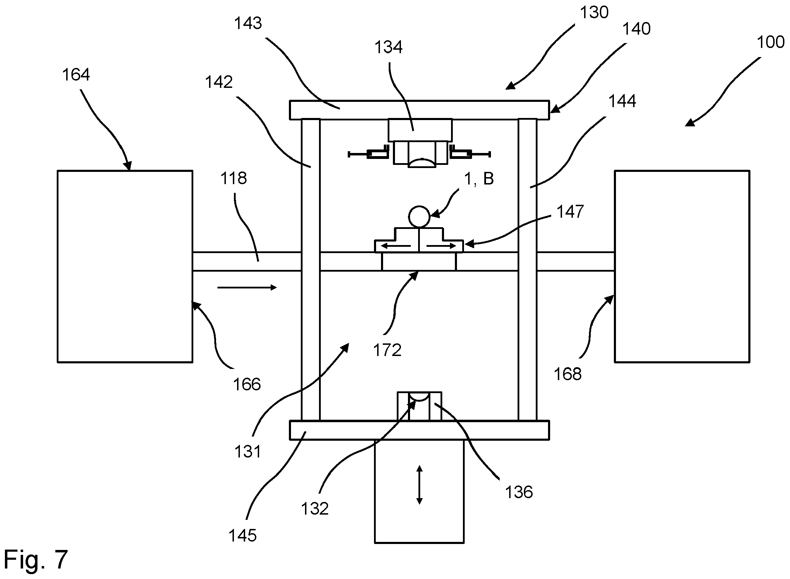

Figur 7 zeigt eine weitere Ausführungsvariante der Umformvorrichtung 100, wobei die Heizvorrichtung 102 keine separaten Heizeinheiten 104-110, sondern ein Heizgehäuse 164 zum Erwärmen der Glasrohlinge 1 aufweist. Das Heizgehäuse 164 ist hier alternativ zu den Heizeinheiten 104 - 110 angeordnet. In dem Heizgehäuse 164 sind insbesondere Heizelemente angeordnet, die zum Erwärmen von Glasrohlingen 1 ausgebildet sind.

Das Heizgehäuse 164 ist relativ zu der Umformeinheit 130 fixiert, sodass keine Relativbewegung zwischen dem Heizgehäuse 164 und der Umformeinheit 130 möglich ist. Die Transportvorrichtung 118 bewegt sich sukzessive in Richtung des horizontalen Pfeils durch das Heizgehäuse 164 und durch den Wirkbereich 131 der Umformeinheit 130 hindurch.

Die Glasrohlinge 1 sind vorliegend auf einer Positioniereinheit 147 angeordnet, die als Auflageeinheit ausgebildet ist. Die Auflageeinheit ist zweigeteilt und kann in Richtung der Pfeile auseinanderbewegt werden. Unterhalb der Positioniereinheit 147 ist eine Aussparung 172 in der Transportvorrichtung 118 vorgesehen. Vorliegend kann das untere Umformelement 136 unter die Aussparung 172 bewegt werden, die Positioniereinheit 147 auseinanderbewegt werden, sodass der Glasrohling 1 von der Halteposition B zur Kavität 136 der Umformeinheit 130 gelangt und somit mit einer vertikal ausgerichteten Verbringbewegung 138 in seine Umformposition A bewegt wird. Die Positioniereinheit 147 kann beispielsweise temperierbar ausgebildet sein, beispielsweise kühlbar und/oder heizbar.

Das Heizgehäuse 164 weist einen Gehäuseausgang 166 und einen Gehäuseeingang 168 auf. Das Heizgehäuse 164 weist somit zwischen dem Gehäuseausgang 166 und dem Gehäuseeingang 168 eine Aussparung auf. In dieser Aussparung ist die Umformeinheit 130 und die Vorzentrierungseinheit 140 angeordnet.

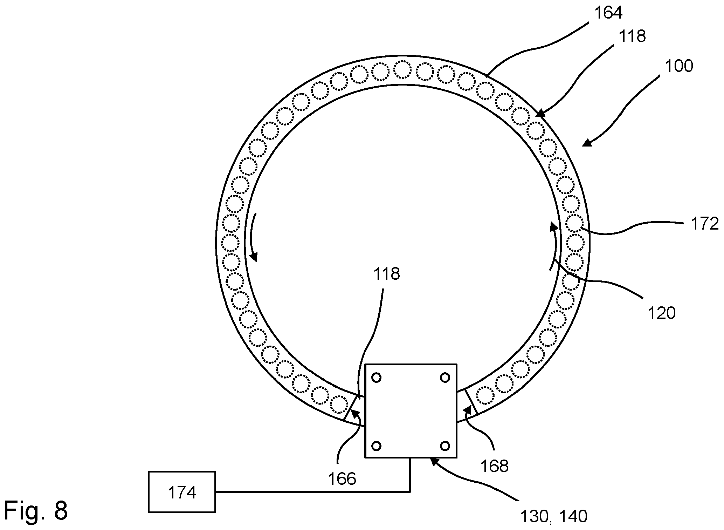

Figur 8 zeigt die im Vorherigen beschriebene Umformvorrichtung 100 in einer Draufsicht, wobei die gestrichelt dargestellten Aussparungen 172 innerhalb des Heizgehäuses 164 angeordnet sind.

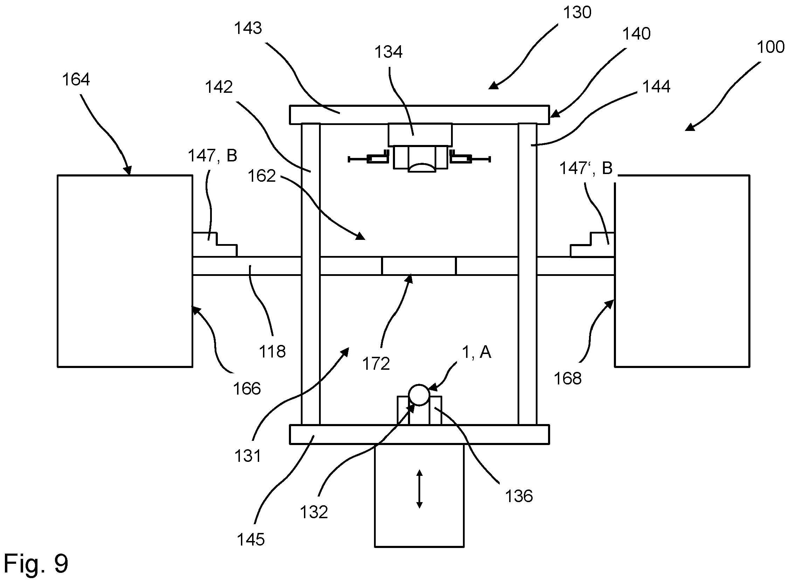

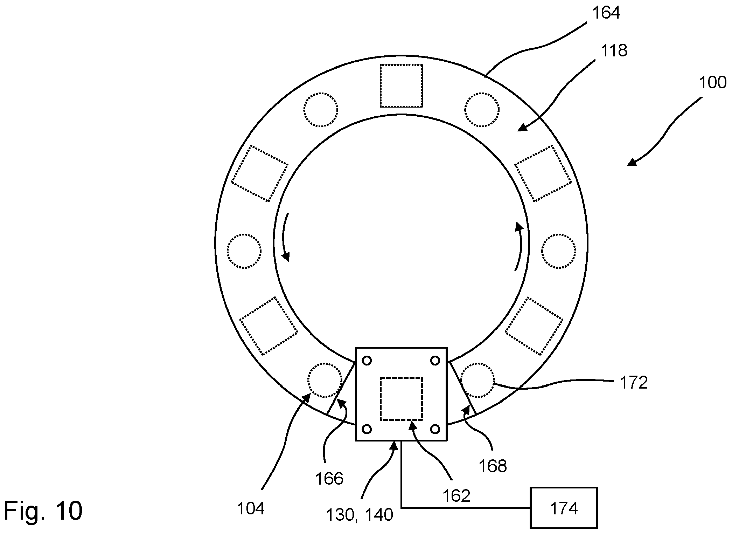

Figur 9 zeigt eine weitere Ausführungsvariante der Umformvorrichtung 100, bei der die Heizvorrichtung 102 ein Heizgehäuse 164 aufweist. Zwischen zwei Haltepositionen B an den zwei Positioniereinheiten 147, 147' ist ein Umformbereich 162 vorgesehen. Dadurch werden die im Vorherigen bereits beschriebenen Vorteile eines separaten Umformbereiches 162 zwischen zwei Haltepositionen B realisiert. Figur 10 zeigt diese Vorrichtung in einer Draufsicht.

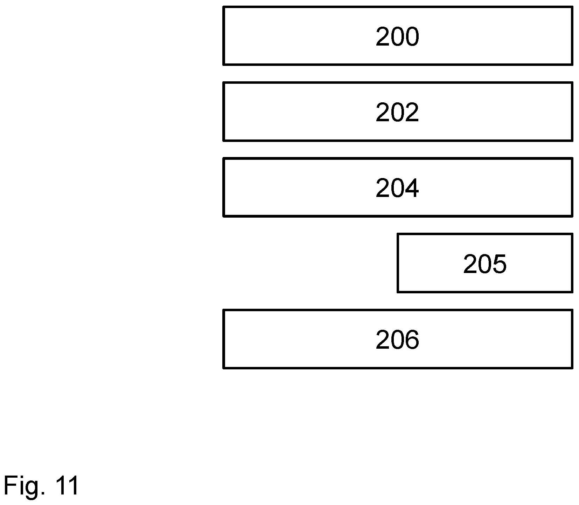

Figur 11 zeigt ein schematisches Verfahren. In Schritt 200 wird ein Glasrohling in einer Halteposition B erwärmt, insbesondere mit einer Heizvorrichtung 102. In Schritt 202 wird einer der Glasrohlinge 1 in einen Wirkbereich 131 einer Umformeinheit 130 bewegt. Dies erfolgt insbesondere mit einer Transportvorrichtung 118.

In Schritt 204 wird der Glasrohling 1 von seiner Halteposition B in eine Umformposition A, insbesondere in einer Kavität 136 eines unteren Umformelements 134, mit einer im Wesentlichen vertikal ausgerichteten Verbringbewegung 138 verbracht. In Schritt 206 wird der Glasrohling 1 umgeformt, insbesondere mit der Umformeinheit 130, vorzugsweise mit den Umformelementen 134, 136.

Vorzugsweise wird nach dem Schritt 204 ein Schritt 205 durchgeführt, in dem ein Umformbereich 162, der zwischen zwei Haltepositionen B angeordnet ist, in den Wirkbereich 131 der Umformeinheit 130 bewegt wird.

Die im Vorherigen beschriebenen Ausführungsvarianten einer Umformvorrichtung 100 ermöglichen die qualitativ hochwertige Herstellung von Glasprodukten aus Glasrohlingen 1 mit einer geringen Taktzeit. Insbesondere durch die Trennung von Aufheizen, Umformen und anschließendem Kühlen, insbesondere Feinkühlen, werden geringe Taktzeiten ermöglicht. Diese grundsätzlich als nicht-isotherme Umformung bekannte Vorgehensweise wird vorliegend dadurch ergänzt, dass die Verbringbewegung 138 von einer Halteposition B zu einer Umformposition A im Wesentlichen vertikal ausgerichtet ist, die eine hohe Qualität des Glasproduktes gewährleistet, da weniger Vibrationen, weniger oder keine Kontaminationen und ein geringerer Wärmeverlust als Fehlerquelle auf den Glasrohling 1 einwirken.

### BEZUGSZEICHEN

- 1: Glasrohling
- 100: Umformvorrichtung
- 102: Heizvorrichtung
- 104: Heizeinheit
- 106: Heizeinheit
- 108: Heizeinheit
- 110: Heizeinheit
- 112: Heizelement
- 114: Ummantelung
- 116: Heizraum
- 118: Transportvorrichtung
- 120: Bewegungsrichtung
- 122: Abdeckelement
- 124: Lager
- 130: Umformeinheit
- 131: Wirkbereich der Umformeinheit
- 132: Kavität
- 134: oberes Umformelement
- 136: unteres Umformelement
- 138: Verbringbewegung/ -richtung
- 140: Vorzentrierungseinheit
- 142: erstes Zentrierelement
- 143: erste Zentrierplatte
- 144: zweites Zentrierelement
- 145: zweite Zentrierplatte
- 146: Positioniervorrichtung
- 147: Positioniereinheit
- 148: Greifer
- 150: erstes Hebelelement
- 152: zweites Hebelelement
- 154: erstes Federelement
- 156: zweites Federelement
- 158: erster Pneumatikzylinder
- 160: zweiter Pneumatikzylinder
- 162: Umformbereich
- 164: Heizgehäuse
- 166: Gehäuseausgang
- 168: Gehäuseeingang
- 172: Aussparung
- 174: Steuerungsvorrichtung
- A: Umformposition
- B: Halteposition

## Patentansprüche

1. Umformvorrichtung (100) zur Herstellung von Glasprodukten, umfassend
- eine Umformeinheit (130) zum Umformen eines verformbaren Glasrohlings (1) in einer Umformposition (A),
- eine Transportvorrichtung (118) zur sukzessiven Bewegung von Glasrohlingen (1) in einen Wirkbereich (131) der Umformeinheit (130), wobei die Transportvorrichtung (118) eine Heizvorrichtung (102) zum Erwärmen von Glasrohlingen (1) in Haltepositionen (B) aufweist,
- wobei die Umformeinheit (130) und die Transportvorrichtung (118) eingerichtet sind, um einen Glasrohling (1) im Wirkbereich (131) der Umformeinheit (130) mit einer Verbringbewegung (138) von seiner Halteposition (B) in die Umformposition (A) zu verbringen, sodass der Glasrohling (1) in einer Kavität (132) der Umformeinheit (130) positionierbar ist, und
- wobei die Verbringbewegung (138) im Wesentlichen vertikal ausgerichtet ist.

2. Umformvorrichtung (100) nach Anspruch 1, wobei
- die Umformeinheit (130) ein oberes Umformelement (134) und ein unteres Umformelement (136), die die Kavität (132) der der Umformeinheit (130) ausbilden, umfasst.

3. Umformvorrichtung (100) nach einem der vorherigen Ansprüche, wobei
- die Umformeinheit (130) eine Vorzentrierungseinheit (140) zur Zentrierung des oberen Umformelements (134) und des unteren Umformelements (136) aufweist, die vorzugsweise im Wesentlichen außerhalb einer Wärmeeinflusszone der Heizvorrichtung (102) angeordnet ist, und/oder
- die Umformeinheit (130) eine Feinzentrierungseinheit aufweist.

4. Umformvorrichtung (100) nach einem der vorherigen Ansprüche, umfassend
- eine Positioniervorrichtung (146) mit zwei oder mehr Positioniereinheiten (147) zum Positionieren der Glasrohlinge (1) in ihren Haltepositionen (B) und/oder zum Freigeben eines Glasrohlings zum Verbringen des Glasrohlings von seiner Halteposition (B) in die Umformposition (A).

5. Umformvorrichtung (100) nach einem der vorherigen Ansprüche, wobei
- die Positioniereinheiten (147) als Greifer (148) und/oder als Auflageeinheit ausgebildet sind.

6. Umformvorrichtung (100) nach einem der vorherigen Ansprüche, wobei
- die Transportvorrichtung (118) zwischen zwei Haltepositionen (B) einen Umformbereich (162) aufweist, wobei die Transportvorrichtung (118) angeordnet und ausgebildet ist, um den Umformbereich (162) nach Verbringen eines Glasrohlings (1) in die Umformposition (A) in einen Wirkbereich (131) der Umformeinheit (130) zu bewegen, und/oder
- Transportvorrichtung (118) Aussparungen (172) aufweist, durch die das untere Umformelement (136) und/oder das obere Umformelement (134) hindurchbewegbar ist bzw. sind.

7. Umformvorrichtung (100) nach einem der vorherigen Ansprüche, wobei
- die Heizvorrichtung (102) zwei oder mehr Heizeinheiten (104-110) mit jeweils einem Heizraum (116) aufweist, wobei jeweils ein Glasrohling (1) in einer Halteposition (B) in dem Heizraum (116) positionierbar ist.

8. Umformvorrichtung (100) nach einem der vorherigen Ansprüche, wobei
- die Heizräume (116) jeweils ein offenes oberes und/oder ein offenes unteres Ende aufweist bzw. aufweisen und die oberen und/oder unteren Enden mit mindestens einem Abdeckelement (122) zumindest teilweise verschließbar sind.

9. Umformvorrichtung (100) nach einem der vorherigen Ansprüche, wobei
- die Heizvorrichtung (102) ein Heizgehäuse (164) aufweist, das eine Aussparung zur Anordnung der Umformeinheit (130) aufweist, wobei vorzugsweise das Heizgehäuse (164) schlauchförmig ausgebildet ist, wobei vorzugsweise der Umformbereich (162) in der Aussparung anordenbar ist.

10. Umformvorrichtung (100) nach einem der vorherigen Ansprüche, wobei
- die Haltepositionen (B) kreisbahnförmig angeordnet sind,
- und wobei vorzugsweise die Transportvorrichtung (118) und/oder die Heizvorrichtung (102) kreisbahnförmig ausgebildet sind.

11. Umformvorrichtung (100) nach einem der vorherigen Ansprüche, umfassend eine Steuerungsvorrichtung (174), die eingerichtet ist, um
- die Transportvorrichtung (118) derart anzusteuern, dass ein Glasrohling (1) in einen Wirkbereich (131) der Umformeinheit (130) bewegt wird, sodass der Glasrohling (1) in seiner Halteposition (B) im Wesentlichen vertikal über der Umformposition (A) positioniert ist, und/oder
- die Positioniervorrichtung (146) derart anzusteuern, dass der Glasrohling (1) mit der im Wesentlichen vertikal ausgerichteten Verbringbewegung (138) von der Halteposition (B) in die Umformposition (A) verbracht wird, sodass der Glasrohling (1) in einer Kavität (132) der Umformeinheit (130) positioniert ist, und/oder
- die Transportvorrichtung (118) derart anzusteuern, dass diese den Umformbereich (162) in den Wirkbereich (131) der Umformeinheit (130) bewegt, und/oder
- die Umformeinheit (130) derart ansteuert, dass der Glasrohling (1) umgeformt wird, insbesondere durch ein Ansteuern des oberen Umformelements (134) und des unteren Umformelements (136) derart, dass sich diese aufeinander zubewegen.

12. Verfahren zur Herstellung von Glasprodukten, insbesondere mit einer Umformvorrichtung nach einem der vorherigen Ansprüche 1-11, umfassend die Schritte:
- Erwärmen von Glasrohlingen (1) in Haltepositionen (B), insbesondere mit einer Heizvorrichtung (102),
- Bewegen einer der Glasrohlinge (1) in einen Wirkbereich (131) einer Umformeinheit (130), insbesondere mit einer Transportvorrichtung (118),
- Verbringen des Glasrohlings (1) von seiner Halteposition (B) in eine Umformposition (A) mit einer im Wesentlichen vertikal ausgerichteten Verbringbewegung (138),
- Umformen des Glasrohlings (1) in der Umformposition (A), insbesondere mit der Umformeinheit (130).

13. Verfahren nach dem vorherigen Anspruch 12, umfassend den Schritt:
- Bewegen eines zwischen zwei Haltepositionen (B) angeordneten Umformbereichs (162) in den Wirkbereich (131) der Umformeinheit (130), nachdem der Glasrohling (1) in die Umformposition (A) verbracht wurde.

14. Verfahren nach einem der vorherigen Ansprüche 12-13, wobei
- das Verbringen des Glasrohlings (1) von seiner Halteposition (B) in die Umformposition (A) ein Bewegen eines unteren Umformelements (136) der Umformeinheit (130) vertikal unter den Glasrohling (1) und/oder ein Freigeben des Glasrohlings (1), insbesondere ein Öffnen einer Positioniereinheit (147), umfasst.

## Claims

1. Forming apparatus (100) for producing glass products, comprising
- a forming unit (130) for forming a deformable glass blank (1) in a forming position (A),
- a transport device (118) for successively moving glass blanks (1) into an working area (131) of the forming unit (130), wherein the transport device (118) has a heating device (102) for heating glass blanks (1) in holding positions (B)
- the forming unit (130) and the transport device (118) being adapted to transfer a glass blank (1) in the working area (131) of the forming unit (130) with a transfer movement (138) from its holding position (B) into the forming position (A), so that the glass blank (1) can be positioned in a cavity (132) of the forming unit (130), and
- wherein the transfer movement (138) is oriented substantially vertically.

2. Forming apparatus (100) according to claim 1, wherein
- the forming unit (130) comprises an upper forming element (134) and a lower forming element (136), which form the cavity (132) of the forming unit (130).

3. Forming apparatus (100) according to any one of the preceding claims, wherein
- the forming unit (130) has a pre-centering unit (140) for centering the upper forming element (134) and the lower forming element (136), which is preferably arranged substantially outside a heat-affected zone of the heating device (102), and/or
- the forming unit (130) has a fine centering unit.

4. Forming apparatus (100) according to any one of the preceding claims, comprising
- a positioning device (146) having two or more positioning units (147) for positioning the glass blanks (1) in their holding positions (B) and/or for releasing a glass blank for moving the glass blank from its holding position (B) to the forming position (A).

5. Forming apparatus (100) according to any one of the preceding claims, wherein
- the positioning units (147) are configured as a gripper (148) and/or as a support unit.

6. Forming apparatus (100) according to any one of the preceding claims, wherein
- the transport device (118) has a forming area (162) between two holding positions (B), wherein the transport device (118) is arranged and configured to move the forming area (162) into a working area (131) of the forming unit (130) after a glass blank (1) has been moved into the forming position (A), and/or
- transport device (118) has recesses (172) through which the lower forming element (136) and/or the upper forming element (134) can be moved.

7. Forming apparatus (100) according to any one of the preceding claims, wherein
- the heating device (102) has two or more heating units (104-110), each having a heating chamber (116), wherein a glass blank (1) can be positioned in a holding position (B) in the heating chamber (116).

8. Forming apparatus (100) according to any one of the preceding claims, wherein
- the heating chambers (116) each has an open upper and/or an open lower end, and the upper and/or lower ends can be at least partially closed by at least one cover element (122).

9. Forming apparatus (100) according to any one of the preceding claims, wherein
- the heating device (102) has a heating housing (164) which has a recess for arranging the forming unit (130), wherein preferably the heating housing (164) is configured in the form of a tube, wherein preferably the forming region (162) can be arranged in the recess.

10. Forming apparatus (100) according to any one of the preceding claims, wherein
- the holding positions (B) are arranged in a circular path,
- and wherein preferably the transport device (118) and/or the heating device (102) are configured in the shape of a circular path.

11. Forming apparatus (100) according to any one of the preceding claims, comprising a control device (174) adapted to
- controlling the transport device (118) such that a glass blank (1) is moved into a working area (131) of the forming unit (130) so that the glass blank (1) is positioned in its holding position (B) substantially vertically above the forming position (A), and/or
- controlling the positioning device (146) such that the glass blank (1) is moved from the holding position (B) to the forming position (A) with the essentially vertically aligned transfer movement (138), so that the glass blank (1) is positioned in a cavity (132) of the forming unit (130), and/or
- controlling the transport device (118) such that it moves the forming area (162) into the working area (131) of the forming unit (130), and/or
- controlling the forming unit (130) in such a way that the glass blank (1) is formed, in particular by controlling the upper forming element (134) and the lower forming element (136) in such a way that they move towards each other.

12. Method for producing glass products, in particular with a forming apparatus according to any one of the preceding claims 1-11, comprising the steps of:
- Heating glass blanks (1) in holding positions (B), in particular with a heating device (102),
- moving one of the glass blanks (1) into a working area (131) of a forming unit (130), in particular with a transport device (118),
- moving the glass blank (1) from its holding position (B) into a forming position (A) with a substantially vertically aligned transfer movement (138),
- forming the glass blank (1) in the forming position (A), in particular with the forming unit (130).

13. Method according to the preceding claim 12, comprising the step of:
- Moving a forming area (162) arranged between two holding positions (B) into the working area (131) of the forming unit (130), after the glass blank (1) has been moved into the forming position (A).

14. Method according to any one of the preceding claims 12-13, wherein
- moving the glass blank (1) from its holding position (B) to the forming position (A) comprises moving a lower forming element (136) of the forming unit (130) vertically below the glass blank (1) and/or releasing the glass blank (1), in particular opening a positioning unit (147).

## Revendications

1. Appareil de formage (100) pour la fabrication de produits en verre, comprenant
- une unité de formage (130) pour former une ébauche de verre déformable (1) dans une position de formage (A),
- un dispositif de transport (118) pour déplacer successivement des ébauches de verre (1) dans une zone de travail (131) de l'unité de formage (130), dans lequel le dispositif de transport (118) comporte un dispositif de chauffage (102) pour chauffer des ébauches de verre (1) dans des positions de maintien (B)
- l'unité de formage (130) et le dispositif de transport (118) sont adaptés pour transférer une ébauche de verre (1) dans la zone de travail (131) de l'unité de formage (130) avec un mouvement de transfert (138) de sa position de maintien (B) à la position de formage (A), de sorte que l'ébauche de verre (1) puisse être positionnée dans une cavité (132) de l'unité de formage (130), et
- dans lequel le mouvement de transfert (138) est orienté sensiblement verticalement.

2. Appareil de formage (100) selon la revendication 1, dans lequel
- l'unité de formage (130) comprend un élément de formage supérieur (134) et un élément de formage inférieur (136), qui forment la cavité (132) de l'unité de formage (130).

3. Appareil de formage (100) selon l'une quelconque des revendications précédentes, dans lequel
- l'unité de formage (130) comporte une unité de pré-centrage (140) pour centrer l'élément de formage supérieur (134) et l'élément de formage inférieur (136), qui est de préférence disposée sensiblement en dehors d'une zone affectée par la chaleur du dispositif de chauffage (102), et/ou
- l'unité de formage (130) est dotée d'une unité de centrage fin.

4. Dispositif de formage (100) selon l'une quelconque des revendications précédentes, comprenant
- un dispositif de positionnement (146) comportant deux ou plusieurs unités de positionnement (147) pour positionner les flans de verre (1) dans leurs positions de maintien (B) et/ou pour libérer un flan de verre afin de déplacer le flan de verre de sa position de maintien (B) à la position de formage (A).

5. Dispositif de formage (100) selon l'une quelconque des revendications précédentes, dans lequel
- les unités de positionnement (147) sont configurées comme une pince (148) et/ou comme une unité de support.

6. Appareil de formage (100) selon l'une quelconque des revendications précédentes, dans lequel
- le dispositif de transport (118) comporte une zone de formage (162) entre deux positions de maintien (B), dans laquelle le dispositif de transport (118) est agencé et configuré pour déplacer la zone de formage (162) dans une zone de travail (131) de l'unité de formage (130) après qu'une ébauche de verre (1) a été déplacée dans la position de formage (A), et/ou
- le dispositif de transport (118) comporte des évidements (172) à travers lesquels l'élément de formage inférieur (136) et/ou l'élément de formage supérieur (134) peuvent être déplacés.

7. Appareil de formage (100) selon l'une quelconque des revendications précédentes, dans lequel
- le dispositif de chauffage (102) comporte deux ou plusieurs unités de chauffage (104-110), chacune ayant une chambre de chauffage (116), dans laquelle une ébauche de verre (1) peut être placée dans une position de maintien (B) dans la chambre de chauffage (116).

8. Appareil de formage (100) selon l'une quelconque des revendications précédentes, dans lequel
- les chambres de chauffage (116) ont chacune une extrémité supérieure et/ou inférieure ouverte, et les extrémités supérieures et/ou inférieures peuvent être au moins partiellement fermées par au moins un élément de couverture (122).

9. Appareil de formage (100) selon l'une quelconque des revendications précédentes, dans lequel
- le dispositif de chauffage (102) a un boîtier de chauffage (164) qui a une cavité pour arranger l'unité de formage (130), où de préférence le boîtier de chauffage (164) est configuré sous la forme d'un tube, où de préférence la région de formage (162) peut être arrangée dans la cavité.

10. Appareil de formage (100) selon l'une quelconque des revendications précédentes, dans lequel
- les positions de maintien (B) sont disposées sur une trajectoire circulaire,
- et dans lequel, de préférence, le dispositif de transport (118) et/ou le dispositif de chauffage (102) sont configurés sous la forme d'une trajectoire circulaire.

11. Dispositif de formage (100) selon l'une quelconque des revendications précédentes, comprenant un dispositif de commande (174) apte à
- commander le dispositif de transport (118) pour qu'une ébauche de verre (1) soit déplacée dans une zone de travail (131) de l'unité de formage (130) de sorte que l'ébauche de verre (1) soit positionnée dans sa position de maintien (B) sensiblement à la verticale de la position de formage (A), et/ou
- commander le dispositif de positionnement (146) de sorte que le flan de verre (1) soit déplacé de la position de maintien (B) à la position de formage (A) avec le mouvement de transfert (138) essentiellement aligné verticalement, de sorte que le flan de verre (1) soit positionné dans une cavité (132) de l'unité de formage (130), et/ou
- commander le dispositif de transport (118) de manière à ce qu'il déplace la zone de formage (162) dans la zone de travail (131) de l'unité de formage (130), et/ou
- commander l'unité de formage (130) de manière à former l'ébauche de verre (1), notamment en commandant l'élément de formage supérieur (134) et l'élément de formage inférieur (136) de manière à ce qu'ils se rapprochent l'un de l'autre.

12. Procédé de fabrication de produits verriers, notamment avec un appareil de formage selon l'une quelconque des revendications précédentes 1-11, comprenant les étapes de :
- chauffer des ébauches de verre (1) dans des positions de maintien (B), notamment avec un dispositif de chauffage (102),
- déplacer l'une des ébauches de verre (1) dans une zone de travail (131) d'une unité de formage (130), en particulier à l'aide d'un dispositif de transport (118),
- déplacer le flan de verre (1) de sa position de maintien (B) à une position de formage (A) avec un mouvement de transfert sensiblement aligné verticalement (138),
- former le flan de verre (1) dans la position de formage (A), en particulier avec l'unité de formage (130).

13. Procédé selon la revendication 12 précédente, comprenant l'étape consistant à :
- Déplacer une zone de formage (162) disposée entre deux positions de maintien (B) dans la zone de travail (131) de l'unité de formage (130), après que le flan de verre (1) ait été déplacé dans la position de formage (A).

14. Procédé selon l'une quelconque des revendications précédentes 12-13, dans lequel
- le déplacement du flan de verre (1) de sa position de maintien (B) à la position de formage (A) comprend le déplacement d'un élément de formage inférieur (136) de l'unité de formage (130) verticalement sous le flan de verre (1) et/ou le dégagement du flan de verre (1), en particulier l'ouverture d'une unité de positionnement (147).
